# EUROPEAN PATENT APPLICATION

(11) **EP 0 924 884 A2**
(43) Date of publication of application: **23.06.1999**
(21) Application number: 98123037.8
(22) Date of filing: 08.12.1998
(51) Int. Cl.: H04B 10/213

(54) **Optical node, optical wavelength multiplexing and demultiplexing method, and optical transmission system**

(30) Priority: 22.12.1997 JP 35356097
(71) Applicant: NEC CORPORATION, Tokyo (JP)
(72) Inventor: Kato, Hiroyuki, Minato-ku, Tokyo (JP)
(74) Representative: VOSSIUS & PARTNER

(57) **Abstract**

Wavelength multiplexed optical signals input at an input terminal 11 initially pass through an optical circulator. Then, a first optical signal having a specific wavelength is transmitted through an optical filter 17 and is output at an output terminal 12. The remaining first optical signals reflected by the optical filter 17 pass through optical circulators 15 and 16, and are then combined with an optical signal input at an input terminal 14 by an optical filter 18. Thereafter the resultant signals are output at an output terminal 13.

## Description

The present invention relates to an optical node device that drops from or adds to a wavelength multiplexed optical signal an optical signal having an arbitrary wavelength.

A wavelength-division multiplexed optical communication system is used as means for constructing a large-capacity optical communication network employing optical fiber. To construct an optical communication network that employs as routing information an optical signal wavelength, an optical ADM (Add/Drop Multiplexing) technique is indispensable whereby an arbitrary wavelength is dropped from, or added to, a wavelength multiplexed signal.

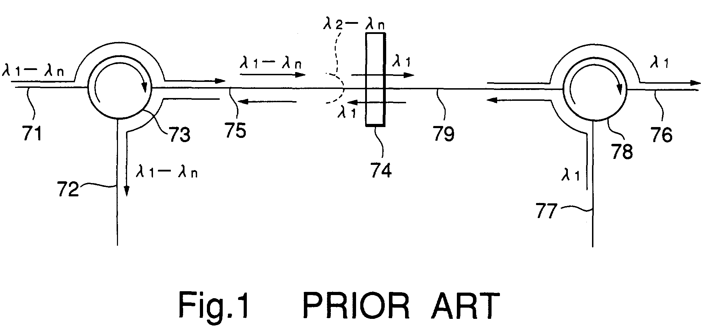

A conventional ADM optical circuit employs two optical circulators and one optical band-pass filter to perform separation and addition of arbitrary optical signals. Such an optical ADM circuit has the structure described, for example, in Japanese Patent Laid-Open Publication No. Hei 9-83495. Fig. 1 is a diagram showing the structure of the conventional optical node device described in the above publication.

In the optical node device in Fig. 1, a wavelength multiplexed signal (wavelengths of λ1 to λn) is input at an input terminal 71 and is incident via an optical circulator 73 on an optical filter 74. The optical filter 74 transmits one wavelength optical signal (λ1 in Fig. 1) and reflects the remaining optical signal. The optical signal having the wavelength λ1 passes through an optical circulator 78 and is output at an output terminal 76. The optical signal including the wavelengths λ2 to λn, which is reflected by the optical filter 74, and an optical signal having the wavelength λ1, which is input at an input terminal 77, are combined at the optical filter 74, with the resultant optical signal being passed through the optical circulator 73 and output at the output terminal 72.

The conventional node device has the following problem. In the structure of the conventional system, only one optical filter that reflects a predetermined optical signal and transmits the remaining optical signal is inserted between two optical circulators. Therefore, an optical signal to be separated and an optical signal to be added enter the same optical filter. In this configuration, coherent crosstalk may easily occur with a commercially available optical filter. In order to reduce the coherent crosstalk so that it does not degrade transmission characteristic, the amount of unnecessary light should be suppressed to less than -38dB of transmitted light, for a transmission speed of 5Gb/s. This value, however, is an extremely severe requirement for a currently practical optical filter. As a result, when an optical node device having the above conventional structure is to be fabricated, the yield for optical filters that satisfy the requisite characteristics is limited and a practical system is very difficult to construct.

To resolve the above problems, it is one objective of the present invention to provide an optical node device that employs commercially available optical filters with reasonable suppression of unnecessary light.

In order to accomplish the above-mentioned goal, according to an aspect of the present invention, the optical node device for dropping a first preassigned optical signal from and inserting a second preassigned optical signal to input wavelength multiplexed optical signal includes a first optical filter for dividing the wavelength multiplexed optical signal into the first preassigned optical signal and a remaining optical signal, and a second optical filter for multiplexing the remaining optical signal and the second preassigned optical signal, wherein the first and second optical filters are disposed so that the first and second preassigned optical signals do not coincide with each other on either the first or second optical filter.

The above and other objects, features and advantages of the present invention will become more apparent from the following detailed description when taken in conjunction with the accompanying drawings wherein:
Fig. 1 shows a configuration for an example of a conventional optical node device;
Fig. 2 shows the basic arrangement of an optical node device according to the present invention;
Fig. 3 shows a configuration for an optical node device according to the first embodiment of the present invention;
Fig. 4 shows characteristics of fiber gratings employed by the optical node device of the present invention, wherein Fig. 4(a) is for transmission, and Fig. 4(b) is for reflection;
Fig. 5 shows a configuration of an optical node device according to the second embodiment of the present invention;
Fig. 6 is a graph showing the characteristics of chirped fiber gratings employed by the optical node device of the present invention, wherein Fig. 6(a), 6(b), 6(c) are for reflection characteristic, dispersion characteristic and transmission characteristic, respectively;
Fig. 7 depicts a configuration for an optical node device according to the third embodiment of the present invention;
Fig 8 shows wavelength dependence of gain characteristics of an optical amplifier;
Fig. 9 shows a configuration for an optical transmission apparatus according to the fourth embodiment of the present invention; and
Fig. 10 shows a configuration for an optical transmission apparatus according to the fifth embodiment of the present invention.

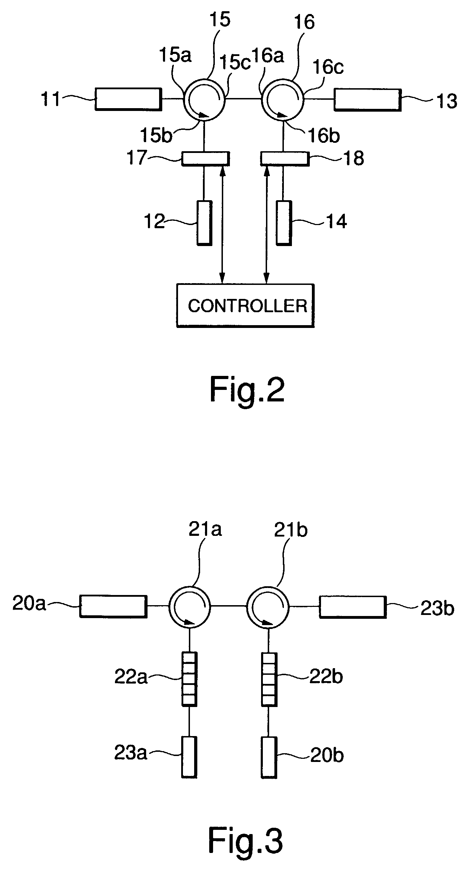

Fig. 2 shows the basic structure of an optical ADM circuit according to the present invention. The optical ADM circuit of the present invention comprises input terminals 11 and 14, output terminals 12 and 13, optical circulators 15 and 16, and optical filters 17 and 18.

An optical circulator is an optical component that includes an input port, an output port, and one or more input/output ports. Incident light on the input port of the optical circulator is transmitted to the input/output port, and light entering at the input/output port is transmitted to the output port or to another input/output port.

In this embodiment, the input port 11 is connected to the input port 15a of the optical circulator 15, and the input/output port 15b is connected via the optical filter 17 to the output terminal 12. The input port 16aof the optical circulator 16 is connected to the output port 15b of the optical circulator 15, the input/output port 16b of the optical circulator 16 is connected through the optical filter 18 to the input terminal 14, and the output terminal 13 is connected to the output port 16c of the optical circulator 16.

The operation performed by the optical node device of the present invention will now be explained referring to Fig. 2. A wavelength multiplexed optical signal that is incident on the input terminal 11 passes from the input port 15a of the optical circulator 15 through the input/output port 15b, then is incident on the optical filter 17. The optical filter 17 transmits one or more of the optical signals that constitute the wavelength multiplexed optical signal, and reflects the remaining optical signals so that they return to the input/output port 15b of the optical circulator 15. The optical signals, which are reflected by the optical filter 17 and which return to the input/output port 15b of the optical circulator 15, are output at the output port 15c of the optical circulator 15 and enter the optical circulator 16. The optical signals that pass through the optical filter 17 reach the output terminal 12. The optical signals that pass through the optical circulator 15 and enter the input port 16a of the optical circulator 16, are again reflected by the optical filter 18 having the same reflection wavelengths as the optical filter 17. The reflected optical signals are thereafter output at the output port 16c of the optical circulator 16. At the same time, the same wavelength optical signal as that transmitted through the optical filter 17 is inputted from the input terminal 14. This input signal is added to the output signal of the optical circulator 16, and the multiplexed optical signal is outputted from the output terminal 13.

Based on the above-mentioned basic structure, embodiments according to the present invention will be described below. A first embodiment structure is shown in Fig. 3. An optical node device according to this embodiment comprises three-port optical circulators 21a and 21b and fiber gratings 22a and 22b, which are used as optical filters. The fiber gratings 22a and 22b have the same reflection wavelength.

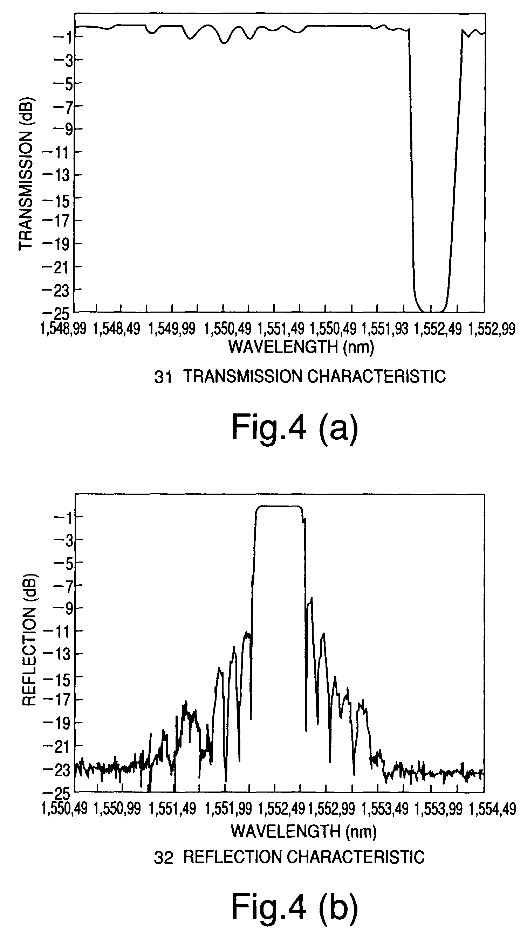

The characteristics of the fiber gratings are shown in Fig. 4. Fig. 4(a) and Fig. 4(b) depict a transmission characteristic, and a reflection characteristic, respectively. The reflection wavelength is 1552.49 nm at 25°C, the transmission light suppression at the wavelength is 26.5 dB and the reflectivity is 99.5%. In this embodiment, optical signals of 1552.5 nm and 1554.1 nm and having an output power of +3 dBm are inputted at an input terminal 20a.

The operation of this first embodiment will be described in detail while referring to the drawings.

In Fig. 3, two optical signals inputted at the first input terminal 20a are propagated through the optical circulator 21a until they reach the fiber grating 22a where only the optical signal having the wavelength of 1552.5 nm is reflected. The reflected optical signal again passes through the optical circulator 21a and is guided to the optical circulator 21b. On the other hand, the optical signal having the wavelength of 1554.1 nm is emitted from a first output terminal 23a.

The optical signal having the wavelength of 1552.5 nm, which is guided to the optical circulator 21b, is reflected by the fiber grating 22b and returns to the optical circulator 21b. Another optical signal having the wavelength of 1554.1 nm is input at a second input terminal 20b to be multiplexed with the reflected optical signal by the fiber grating 22b. The multiplexed optical signal is output at a second output terminal 23b.

In this embodiment, the wavelength of an optical signal input at the second input terminal 20b is the same as that of the optical signal to be coupled to the first output terminal 23a. However, an optical signal having an arbitrary wavelength that will not be reflected by the fiber grating 22b may be inputted.

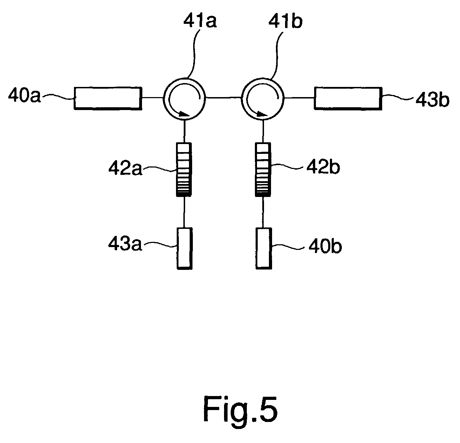

Fig. 5 shows the structure according to a second embodiment of the present invention. An optical node device according to this embodiment comprises three-port optical circulators 41a and 41b and chirped fiber gratings 42a and 42b used as optical filters. The effective refractive indexes or the grating pitches of the chirped fiber gratings 42a and 42b are adjusted so as to have high reflectivities in a wide wavelength range.

The operation for the second embodiment of the present invention will be described in detail, referring to the drawings. In Fig. 5, wavelength multiplexed optical signal incident on an input terminal 40a is propagated through the optical circulator 41a until they reach the chirped fiber grating 42a. Among optical signals included in the wavelength multiplexed optical signal, an optical signal having a wavelength that falls within the reflection region of the chirped fiber grating 42a is reflected and returns to the optical circulators 41a. Then the reflected optical signal goes to the optical circulator 41b, further to the chirped fiber grating 42b where it is again reflected to the optical circulator 41b. The optical signal that is not reflected by the chirped fiber grating 42a is outputted from an output terminal 43a.

When the optical signal that has the same wavelength as that of the optical signal output via the output terminal 43a, or that has the wavelength that is not reflected by the chirped fiber grating 42b, is input via an input terminal 40b, this optical signal is multiplexed with the optical signal reflected by the chirped fiber grating 42b. The multiplexed optical signal is outputted from an output terminal 43b.

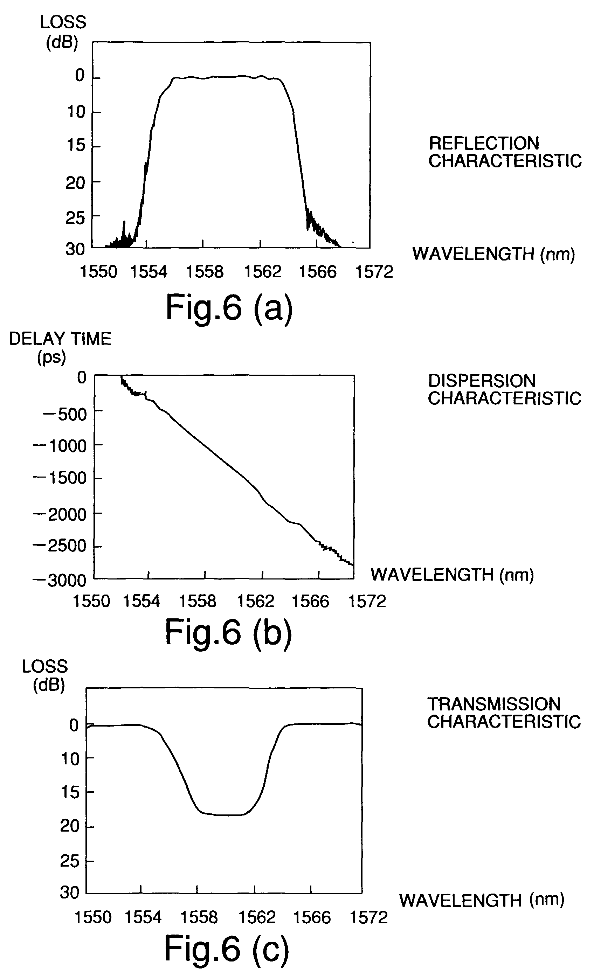

Generally speaking, among wavelength components in wavelength multiplexed optical signal, shorter wavelength components propagates faster than longer ones in optical transmission path. Therefore, by adopting a chirped fiber grating having a monotonously changing delay time with wavelength as either the chirped fiber gratings 42a or 42b, transmission delay difference can be compensated for. The dispersion characteristic and the transmission characteristic of the chirped fiber grating are shown in Fig. 6. As can be seen in Fig.6, chirped fiber grating with monotonously changing delay can be realized.

In this embodiment, the chirped fiber gratings are used as optical filters. Instead, a plurality of fiber gratings that reflect mutually different wavelengths may be located at multiple stages. Furthermore, instead of a fiber grating, optical filters using dielectric multi-layer films, or optical filters using Fabry-Pérot interferometers may be employed.

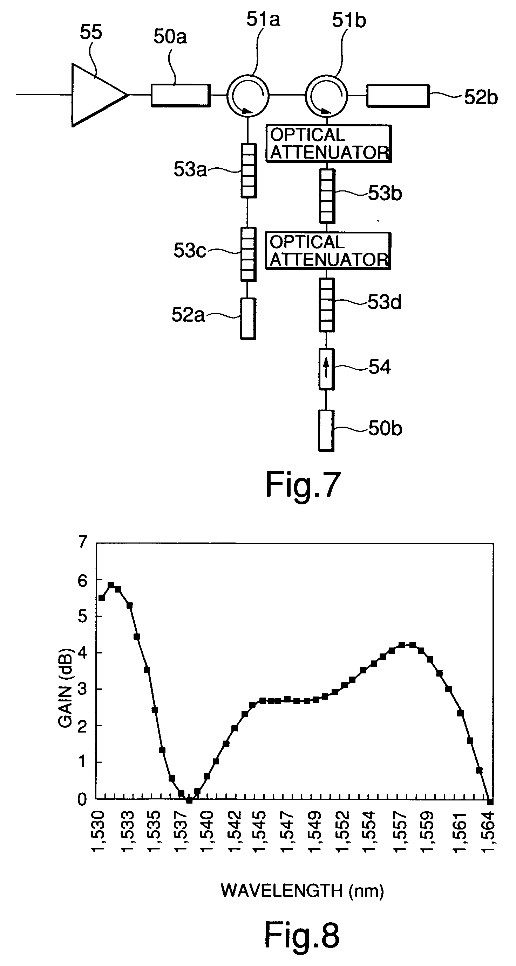

In Fig. 7 is shown the structure of an optical node device according to a third embodiment of the present invention. The optical node device in this embodiment comprises three-port optical circulators 51a and 51b and fiber gratings 53a, 53b, 53c and 53d that are used as optical filters. A first input terminal 50a is connected to the output terminal of an optical amplifier 55. The fiber gratings 53a and 53b have the same reflection wavelength λa, and the fiber gratings 53c and 53d have the same reflection wavelength λb.

The operation of the third embodiment of the present invention will be described in detail while referring to the drawings. In Fig. 7, wavelength multiplexed optical signal is input at the input terminal 50a and passes through the optical circulator 51a to the fiber grating 53a. An optical signal having a specific wavelength is reflected by the fiber grating 53a, while the remaining optical signals pass through the fiber grating 53a to the fiber grating 53c. One of the optical signals having a wavelength different from that of the above mentioned specific wavelength is reflected by the fiber grating 53c and is guided through the optical circulator 51a to the optical circulator 51b. The optical signals that are not reflected by the fiber grating 53c pass through to a first output terminal 52a.

When optical signal that has the same wavelength as that of the optical signal outputted at the first output terminal 52a, or that has a wavelength that will not be reflected by the fiber gratings 53b and 53c, is inputted at a second input terminal 50b, this input optical signal is wavelength multiplexed with the optical signals reflected by the fiber gratings 53a and 53c, and the resultant optical signal is transmitted to a second output terminal 52b.

Therefore, the ADM optical circuit in this embodiment transmits optical two different wavelength components in the wavelength multiplexed optical signal. The remaining signals are dropped and arbitrary wavelength component included in the remaining signal wavelengths can be added.

In this embodiment, optical signals having two wavelengths that are included in the input wavelength multiplexed optical signal are transmitted and the remaining optical signals are extracted or added. However, by appropriately selecting the number of fiber gratings and the reflection wavelength, an optical node device that extracts or adds an arbitrary number of optical signals can also be provided.

The third embodiment can also be modified to provide a gain equalizer of an optical amplifier. In general, gain characteristic of an optical amplifier depends on wavelength. Fig. 8 depicts a typical gain characteristic of an optical amplifier. While an optical amplifier is indispensable for a long distance optical transmission system, problems frequently arise related to the wavelength dependency of the gain characteristic. By employing fiber gratings 53b and 53d having different reflectivities, the node device of the third embodiment can be used as a gain equalizer.

In the structure of the device in this embodiment, optical signals of 1540.5 nm, 1548.51 nm and 1554.94 nm are inputted to an optical amplifier 55 by an output power of -20 dBm. The output of optical signals at the first input terminal 50a are set at +17.08 dBm, +18.76 dBm and +19.95 dBm, respectively. The fiber gratings 53a and 53b are set so that they reflect an optical signal of 1554.94 nm, while the fiber gratings 53c and 53d are so set that they reflect an optical signal of 1540.56 nm. When fiber gratings having reflectivities of 99.9% are employed, the output powers at the output terminal 52b for optical signals of 1540.56 nm and 1554.94 nm are +13.48 dBm and +15.16 dBm, respectively.

When only the fiber grating 53b is replaced with one having a reflectivity of 47%, the outputs at the output terminal 52b for optical signals of 1540.56 nm and 1554.94 nm both becomes equal to +13.48 dBm. Therefore, the optical node device in this embodiment operates as a gain equalizer.

In this embodiment, the gain equalization of an optical amplifier is accomplished by adjusting the reflectivity of the fiber gratings. However, optical attenuators may be located between the optical circulator 51b and the fiber grating 53b and between the fiber gratings 53b and 53d, so that the output power of the optical signal from the output terminal 52b will be constant, regardless of its wavelength. Such an optical attenuator may be a fixed optical attenuator or a metal doped fiber, for which the attenuation per unit length may be adjusted to desired attenuation.

Furthermore, the node device of the third embodiment can also be modified to provide a dispersion compensator. In long distance transmission system, wavelength dispersion of optical fiber transmission line causes signal waveform distortion, which degrades transmission characteristics.

In this embodiment, when the fiber gratings 53a, 53b, 53c and 53d are so located that they reflect optical signals, beginning with optical signals having longer wavelengths, optical signals having shorter wavelengths propagate longer path to reach the second output terminal 52b than do optical signals having longer wavelengths. Therefore, the optical node device in this embodiment can be so set that an optical signal having a long, wavelength is transmitted rapidly. As a result, the optical node device of the present invention can also serve as a dispersion compensator.

When the fiber gratings 53a, 53b, 53c and 53d are located so that they reflect optical signals beginning with those having long wavelengths, and the reflectivities of the fiber gratings are adjusted, it is apparent that the optical node device can be provided that has a dispersion compensation function and a gain equalization function.

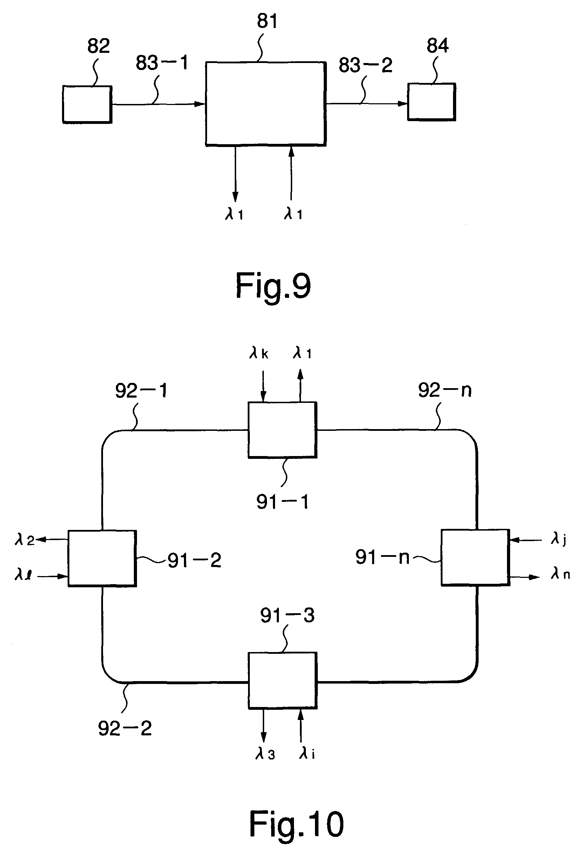

Fig. 9 shows the structure of an optical transmission apparatus according to a fourth embodiment of the present invention. The optical transmission apparatus in this embodiment comprises an optical node device 81, an optical transmitter 82, optical fiber transmission paths 83-1 and 83-2 and an optical receiver 84. The optical transmitter 82 emits wavelength multiplexed optical signal in wavelength band of 1.5 µm to the optical fiber transmission path 83-1. The optical node device 81 has the structure shown in Fig. 7. In this embodiment, of the wavelength multiplexed optical signals transmitted by the optical transmitter 82, only an optical signal having a wavelength λ1 is separated by the optical node device 81, and another optical signal having the same wavelength λ1 is multiplexed on the wavelength multiplexed optical signal which are then outputted from the optical node device 81. The wavelength multiplexed optical signal outputted by the optical node device 81 are demultiplexed into individual wavelengths by the optical receiver 84 and converted to original electric signals.

In Fig. 10 is shown the structure of an optical transmission apparatus according to a fifth embodiment of the present invention. The optical transmission apparatus in this embodiment comprises a plurality of optical node devices 91-1 to 91-n, which are connected in ring shape and optical fiber transmission paths 92-1 to 92-n, to which the optical node devices are connected. The optical node devices 91-1 to 91-n are structured as is shown in Fig. 7, and optical filters constituting the individual node devices are those whose reflection wavelengths can be adjusted. Since in this embodiment fiber gratings are employed as optical filters, their reflection wavelengths can be adjusted by changing their temperatures. When another type of optical filters is employed, a corresponding adjustment method should be employed. For a dielectric multi-layer film filter, for example, the angle of incident light to multi-layer is adjusted to control the transmission wavelength. For an optical filter using a Fabry-Pérot interferometer, e.g., an optical filter where two translucent mirrors are positioned opposite each other separated by a gap, or a Fabry-Pérot filter, for which two optical fibers are positioned opposite each other and for which mirror grinding has been performed for the distal ends and a reflection film has been deposited by vacuum evaporation, the interval between the translucent mirrors is adjusted to control the reflection wavelength. In this embodiment, different wavelengths λ1 to λn are allocated for the individual optical node devices of the optical transmission apparatus. Each optical node device separates and fetches, from optical signals that are circulating along the optical fiber transmission path, only an optical signal having a preassigned wavelength. When a communication request is issued at each node, the node adds that message to an optical signal (represented by λi, λj, λk or λl in Fig. 10) having a wavelength preassigned to a destination node, and transmits the optical signal along the optical fiber transmission path.

As is described above, according to the present invention, since two or more optical filters are employed to obtain necessary suppression of unwanted light, it is not necessary to obtain required suppression only with one optical filter. Therefore, the optical node device can be constituted by using only practical, i.e., commercially available, optical filters. In addition, since the two or more optical filters are disposed so that two optical signals having the same wavelength, that is, added optical signal and an optical signal to be dropped, do not coincide with each other on one optical filter, the generation of coherent crosstalk can be prevented.

Furthermore, according to the present invention, since a plurality of optical filters having appropriate characteristics are properly located, an optical node device can be provided that has a dispersion compensation function or a gain equalization function.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

## Claims

1. An optical node device for dropping a first preassigned optical signal from and inserting a second preassigned optical signal into a wavelength multiplexed optical signal comprising:
a first optical filter for dividing said wavelength multiplexed optical signal into said first preassigned optical signal and a remaining optical signal; and
a second optical filter for multiplexing said remaining optical signal and said second preassigned optical signal,
wherein said first and second optical filters are disposed so that said first and second preassigned optical signals do not coincide with each other on either said first or second optical filter.

2. The optical node device as defined in claim 1, wherein said first and second preassigned optical signals have the same wavelength.

3. The optical node device as defined in claim 1 or 2, further comprising a first optical circulator and a second optical circulator, wherein said first and second optical circulators are disposed between said first and second optical filters and connected so that said remaining optical signal goes through said first optical circulator, said second optical circulator and said second optical filter in sequence.

4. The optical node device as defined in claim 3, further comprising an optical attenuator inserted between said second optical circulator and said second optical filter.

5. The device as defined in claim 1, 2, 3, or 4, wherein at least one of said first and second optical filters delays incident light with a monotonously changing delay according to wavelength.

6. The device as defined in any one of claims 1 to 5, wherein at least one of said first and second optical filters comprises a plurality of cascaded optical filters.

7. The optical node device as defined in claim 6, wherein said plurality of optical filters are arranged in order of reflection wavelength and said wavelength multiplexed optical signal is fisrt incident on a one of said plurality of optical filters having the largest reflection wavelength.

8. The optical node device as defined in claim 6 or 7, wherein each of said plurality of optical filters possesses different reflectivities.

9. The device as defined in any one of claims 1 to 8, wherein at least one of said first and said second optical filters comprises a fiber grating.

10. The device as defined in any one of claims 1 to 9, wherein at least one of said first and second optical filters comprises an optical filter having a dielectric multi-layer film.

11. The device as defined in any one of claims 1 to 10, wherein at least one of said first and second optical filters comprises an optical filter having a Fabry-Pérot interferometer.

12. The device as defined in claim 9, 10, or 11, further comprising a controller for adjusting a center wavelength of one of said first and second optical filters.

13. An optical signal multiplexing/demultiplexing method comprising the steps of:
separating an input wavelength multiplexed optical signal into a first optical signal having a first predetermined wavelength and a first remaining optical signal; and
selecting a second optical signal having second predetermined wavelengths from input optical signal and one of said first optical signal and said first remaining optical signal.

14. The optical wavelength multiplexing/demultiplexing method as defined in claim 13, wherein said first and second predetermined wavelengths have the same value.

15. An optical transmission system comprising:
a plurality of optical node devices; and
at least one optical fiber transmission path along which said plurality of optical node devices are interconnected,
wherein each of said plurality of node devices comprises:
a first optical filter for dividing input wavelength multiplexed optical signal into a first preassigned optical signal and a remaining optical signal; and
a second optical filter for multiplexing said remaining optical signal and a second preassigned optical signal,
wherein said first and second optical filters are disposed so that said first and second preassigned optical signals do not coincide with each other on either said first or second optical filter.

16. The optical transmission system as defined in claim 15, wherein said plurality of optical node devices are connected in a ring shape.

17. The optical transmission system as defined in claim 15 or 16, further comprising an optical transmitter for transmitting an optical signal.

18. An optical add/drop multiplexing device, comprising:
a first optical circulator having an input port for receiving an input signal, an output port, and an input/output port;
a second optical circulator having an input port, an output port for providing an output signal, and an input/output port, said input port of said second circulator being connected to said output port of said first circulator;
a first filter means connected to said input/output port of said first circulator for filtering the input signal to pass a first signal with a first wavelength and reflect a remainder signal back to said first circulator;
an output terminal connected to said first filter for outputting the first signal;
a second filter means connected to said input/output port of said second circulator for multiplexing a second signal and the remainder signal; and
an input terminal for receiving the second signal.
